# EUROPÄISCHE PATENTSCHRIFT

(11) **EP 1 550 849 B1**
(45) Veröffentlichungstag und Bekanntmachung des Hinweises auf die Patenterteilung: **18.08.2010**
(21) Anmeldenummer: 05102785.2
(22) Anmeldetag: 14.09.1999
(51) Int. Cl.: G01G 21/24

(54) **Kraftmessvorrichtung, insbesondere Wägezelle**
Force measuring apparatus, particulary a weighing cell
Dispositif de mesure de force, en particulier un capteur de pesage

(30) Priorität: 30.09.1998 DE 19845023
(43) Veröffentlichungstag der Anmeldung: 06.07.2005
(62) Teilanmeldung aus: 99203008.0
(73) Patentinhaber: Mettler-Toledo AG, 8606 Greifensee (CH)
(72) Erfinder: Burkhard, Hans-Rudolf, 8492, Wila (CH); Hess, Luzi, 8051, Zürich (CH); Köppel, Thomas, 8618, Oetwil am See (CH); Emery, Jean-Christophe, 8603, Schwerzenbach (CH); Kaderli, Erwin, 8604, Volketswil (CH)

(56) Entgegenhaltungen:
- DE-A- 4 305 425
- DE-U- 29 809 833

## Beschreibung

Die Erfindung bezieht sich auf eine Kraftmeßvorrichtung, insbesondere Wägezelle, mit einem zur Aufnahme der zu messenden Kraft dienenden Lastaufnehmer, der von zwei in zwei zueinander parallelen Ebenen sich erstreckenden, in der Richtung dieser Ebenen steifen und quer zur Richtung dieser Ebenen biegeelastischen Parallelogrammlenkern, deren jeder an einem Ende mit dem Lastaufnehmer und an einem in der Längsrichtung des Parallelogrammlenkers dazu entgegengesetzten anderen Ende mit einem feststehenden Teil der Kraftmeßvorrichtung verbunden ist, an dem feststehenden Teil parallel auslenkbar geführt ist, und einer zur Übertragung mindestens eines Teils der den Lastaufnehmer belastenden, zu messenden Kraft auf einen Meßwandler zur Lieferung eines der zu messenden Kraft entsprechenden Signals dienenden Vorrichtung, die mindestens einen um eine bezüglich eines sich zwischen den beiden Parallelogrammlenkern in einer zu deren Ebene parallelen Ebene erstreckenden Tragbereichs des feststehenden Teils feststehende Schwenkachse verschwenkbaren, der Kraftübertragung dienenden Hebel aufweist, der an den Lastaufnehmer kräftemäßig angekoppelt ist.

Es ist bekannt, Wägezellen dieser Art aus zahlreichen Einzelteilen zusammenzusetzen, welche mit dem feststehenden Teil starr verbunden oder an dem feststehenden Teil beweglich angelenkt werden müssen. Insbesondere befinden sich an dem feststehenden Teil die Anlenkstellen der Parallelogrammlenker und des Hebels. Da Lageabweichungen dieser Anlenkstellen unter dem Einfluß der zu messenden Kraft die Meßgenauigkeit beeinträchtigen, soll das feststehende Teil besonders stabil sein.

Auch ist es bekannt (DE 41 19 734 A1 und DE 298 09 833 U), das feststehende Teil, die Parallelogrammlenker, den Lastaufnehmer und den Hebel in der Form von zusammenhängenden Materialbereichen eines einstückigen Materialblocks auszubilden, wodurch insbesondere das Zusammenbauen entsprechender Einzelteile entfällt. Das Heraustrennen der einzelnen Materialbereiche aus dem Materialblock, das beispielsweise durch Funkenerodieren erfolgen kann, stellt jedoch insbesondere dann einen verhältnismäßig aufwendigen Arbeitsvorgang dar, wenn wegen hoher Anforderungen an die Meßgenauigkeit die dem beweglichen Zusammenhang dieser Materialbereiche dienenden Materialdünnstellen des Materialblocks einer entsprechend feinen Bearbeitung bedürfen.

In DE 43 05 425 A1 wird eine Wägezelle beschrieben, die eine einstückige Kraftübertragungsvorrichtung aufweist. Diese Kraftübertragungsvorrichtung ist innerhalb einer einstückigen Parallelogrammführung angeordnet und mit dieser fest verbunden. Die Parallelogrammführung ist gegenüber der Kraftübertragungsvorrichtung wesentlich breiter ausgestaltet.

Der Erfindung liegt die Aufgabe zugrunde, eine Kraftmeßvorrichtung der eingangs genannten Art zu schaffen, die bei zufriedenstellender Meßgenauigkeit aus nur wenigen und einfachen Bauteilen zusammengesetzt ist.

Erfindungsgemäß wird diese Aufgabe dadurch gelöst, daß das feststehende Teil in der Form eines den Tragbereich bildenden Stegs ausgebildet ist, der an seinen in der Längsrichtung der Parallelogrammlenker sich erstreckenden Endbereichen je einen sich quer zum Steg erstreckenden Schenkel aufweist, an der die Parallelogrammlenker auf der Seite ihrer dem Lastaufnehmer abgewandten Enden abgestützt sind.

Die durch den Steg und die sich quer dazu erstreckenden Schenkel bedingte Form führt zu einer besonders guten Stabilität des feststehenden Teils. Gleichzeitig ermöglicht diese Form des feststehenden Teils auf einfache Weise die Abstützung der Enden der Parallelogrammlenker. Letztere erstrecken sich von ihren an den Schenkeln befestigten Enden beidseits des Stegs und parallel dazu bis zu ihren mit dem Lastaufnehmer verbundenen Enden. Infolge ihrer Biegeelastizität bilden sie eine Parallelogrammführung für den Lastaufnehmer, deren Parallelogrammebene sich senkrecht zu den Ebenen der Parallelogrammlenker sowie in der vom einen Parallelogrammlenkerende zum anderen Parallelogrammlenkerende gerichteten Längsrichtung der Parallelogrammlenker erstreckt. Wegen der hohen Formstabilität des feststehenden Teils bleiben bei Belastung die Parallelogrammeckpunkte der Parallelogrammführung stabil erhalten, was für die Meßgenauigkeit von Vorteil ist. Gleichzeitig ist die Form des feststehenden Teils einfach, so daß es mit verhältnismäßig geringem Aufwand hergestellt werden kann.

In einer vorteilhaften Ausführungsform dient es insbesondere der Einfachheit, daß der Steg und die daran vorgesehenen Schenkel durch einen Abschnitt eines einstückigen H-Profils gebildet sind, in dem der Steg den senkrechten Balken und die Schenkel die Querbalken der H-Form bilden. Ein derartiges H-Profil kann leicht hergestellt werden. Beispielsweise kann es als Strangpreßprofil oder als Druckgußprofil zur Verfügung gestellt werden.

Ferner dient es der Einfachheit des Aufbaus, daß in einer zweckmäßigen Ausführungsform die Schenkel zu den Ebenen der Parallelogrammlenker parallele Randflächenbereiche aufweisen, auf denen die dem Lastaufnehmer abgewandten Enden der Parallelogrammlenker befestigt sind. Dies ist vor allem auch dann von Vorteil, wenn, wie zumeist, die Biegeelastizität der Parallelogrammlenker durch ihre Enden bildende Biegelager verwirklicht wird, die zwischen zwei als Befestigungsflächen dienenden Enden eine Biegelinie aufweisen.
Gemäß dem Gedanken der Erfindung ist vorgesehen, daß die zur Übertragung der zu messenden Kraft dienende Vorrichtung einen einstückigen Materialblock aufweist, in dem von den Materialblock quer zu der durch die Längsrichtung der Parallelogrammlenker und die Auslenkrichtung des Lastaufnehmers bestimmten Parallelogrammebene durchsetzenden Ausnehmungen ein am Steg des feststehenden Teils festgelegter Materialbereich und ein damit über einen als Biegestelle geformten, die Schwenkachse bildenden Materialbereich zusammenhängender, den Hebel bildender Materialbereich begrenzt sind.

Da bei dieser Ausführungsform der Hebel, die Biegestelle und der an der Grundplatte festgelegte Materialbereich einstückig zusammenhängen, bedarf es nicht der Montage eines getrennten, zur Abstützung des Hebels dienenden Biegelagers. Die mit dem Hebel einstückig zusammenhängende Biegestelle bietet den Vorteil, daß sie keine Verschraubungen erfordert. Der Materialblock und die darin begrenzten Materialbereiche können sehr klein und kompakt gestaltet werden. Auch lassen sich die für die Meßgenauigkeit kritischen Bereiche, insbesondere die Biegestelle des Hebels, mit kleinen Toleranzen ausführen.

Bei Bedarf kann die zur Übertragung der zu messenden Kraft dienende Vorrichtung derart ausgeführt sein, daß in dem Materialblock von einer ihn quer zur Parallelogrammebene durchsetzenden Ausnehmung mindestens ein einen dem Hebel nachgeschalteten weiteren Hebel bildender Materialbereich sowie ein an seinem einen Ende mit einem Arm des weiteren Hebels und an seinem dazu entgegengesetzten anderen Ende mit dem dem Lastaufnehmer abgewandten Arm des vorgeschalteten Hebels zusammenhängender, als weiteres Koppelglied dienender Materialbereich begrenzt ist. Der weitere Hebel ermöglicht eine weitere Kraftübersetzung, sofern dies aus Platz- oder Festigkeitsgründen mit einem einzigen Hebel nicht erreichbar ist. Analog könnte im Bedarfsfall auch dem weiteren Hebel noch einer oder mehrere zusätzliche Hebel nachgeschaltet werden.

Bei diesen einstückigen Ausführungsformen der zur Übertragung der Kraft dienenden Vorrichtung ist es besonders zweckmäßig, daß zumindest ein Teil der Ausnehmungen nur durch eine den Materialblock durchtrennende dünne Schnittlinie gebildet ist.

Da für die beweglichen Bereiche des Materialblocks nur sehr kleine Auslenkwege erforderlich sind, kann die Breite der dünnen Schnittlinien sehr klein sein. Solche dünnen Schnittlinien lassen sich vor allem durch Funkenerodieren herstellen. Durch diese Minimierung der Größe der Ausnehmungen wird für die davon begrenzten Materialbereiche ein Maximum an Platz zur Verfügung gestellt, wodurch die Festigkeit der von diesen Materialbereichen gebildeten kraftübertragenden Teile gegen Durchbiegungen erhöht und damit die Meßgenauigkeit gefördert wird.

Die Erfindung sieht ferner vor, daß der Meßwandler am feststehenden Teil beziehungsweise am Steg festgelegt ist.

Die Form und Stabilität des feststehenden Teils eignet sich sehr gut dafür, den Meßwandler auf einfache Weise lagegenau und lagebeständig abzustützen. Häufig handelt es sich bei dem Meßwandler um ein elektromagnetisches Kraftkompensationssystem. Dieses weist einen mit einem Magnetjoch versehenen Permanentmagneten auf, der am feststehenden Teil befestigt ist. In den Luftspalt des durch den Permanentmagneten und das Magnetjoch gebildeten Magnetkreises taucht eine von einem Kompensationsstrom durchflossene Kraftkompensationsspule ein, welche mit dem Hebel der Kraftübertragungsvorrichtung verbunden ist. Der Meßwandler ist mit einem Positionsgeber versehen, der die Lage der Kompensationsspule in dem Magnetfeld überwacht und ein Positionserfassungssignal erzeugt, durch das der Kompensationsstrom derart geregelt wird, daß die Kompensationsspule bei Kraftbelastung des Lastaufnehmers in ihrer Ausgangslage gehalten wird. Der Kompensationsstrom stellt somit ein Maß für die zu messende Kraft dar.

Auch sieht es die Erfindung gemäß einem weiteren Gesichtspunkt vor, daß ein an einem Oberflächenbereich des Steges festgelegter Träger einen sich quer zum feststehenden Teil erstreckenden Schaft aufweist, der mit Spiel durch eine in dem dem Oberflächenbereich zugewandten Parallelogrammlenker vorgesehene Öffnung hindurchgeführt ist. Durch diesen Träger, der beispielsweise an seinem dem Steg entgegengesetzten Endbereich mit der Grundplatte eines Waagengehäuses verbunden sein kann, wird das tragende Teil mit allen daran festgelegten Teilen stationär abgestützt. Die durch die Einleitung der zu messenden Kraft auftretenden Abstützkräfte und -momente werden dabei von dem Träger sehr günstig aufgenommen und abgeleitet.

Weiter kann zur Einstellung der Biegesteifigkeit der von den Dünnstellen gebildeten Biegestellen vorgesehen sein, daß die Parallelogrammlenker im Bereich der Dünnstellen mit das H-Profil quer zur Ebene der Parallelogrammlenker durchsetzenden Durchbrechungen versehen sind. Diese Durchbrechungen legen zwischen sich und den die Parallelogrammlenker begrenzenden Längsschlitzen die Länge der Dünnstellen quer zur Längsachse der Parallelogrammlenker und damit zusammen mit der Dicke dieser Dünnstellen die Größe des Materialquerschnitts fest, an dem die Parallelogrammlenker einerseits mit dem feststehenden Teil und andererseits mit dem Lastaufnehmer zusammenhängen. Hierdurch ist in Abhängigkeit von dem für das H- Profil verwendete Material die Biegeelastizität der Biegestellen bestimmt.

Bei der in DE 43 05 425 A vorstehend erörterten Ausführungsformen sind mindestens die Parallelführung einerseits und die zur Kraftübertragung vom Lastaufnehmer auf den Meßwandler dienende Vorrichtung andererseits als getrennte Einheiten ausgebildet. Dies hat zwar den Vorteil, daß die Parallelogrammführung insbesondere für höhere Nennlasten entsprechend stark und robust ausgelegt werden kann, während die Kraftübertragungsvorrichtung davon unabhängig entsprechend den dort herrschenden geringeren Belastungen leichter, aber dafür präziser ausgeführt werden kann. Um die getrennt ausgebildeten Einheiten zusammenzusetzen, ist jedoch ein Montagevorgang erforderlich. Dies wird gemäß einem anderen Aspekt der Erfindung dadurch vermieden, daß der Lastaufnehmer, die Parallelogrammlenker, das feststehende Teil und der Hebel durch einstückig zusammenhängende Materialbereiche eines quaderförmigen Materialblocks gebildet sind, in dem diese Materialbereiche von den Materialblock quer zu der in der Längsrichtung der Parallelogrammlenker sich erstreckenden Parallelogrammebene durchsetzenden materialfreien Bereichen begrenzt sind und der im Bereich der Parallelogrammlenker und der sie begrenzenden materialfreien Bereiche quer zur Parallelogrammebene eine größere Materialstärke aufweist als im Bereich des Hebels. Dadurch erhalten die besonders hoch belasteten Parallelogrammlenker eine erhöhte Festigkeit, während die Ausbildung des Hebels nur die Bearbeitung einer geringeren Materialstärke erfordert. Infolge ihrer erhöhten Festigkeit haben die Parallelogrammlenker eine erhöhte Steifigkeit gegen eckenlastbedingte Verwindung. Hierdurch wird eckenlastbedingten Meßfehlern wirkungsvoll begegnet.

Dieses Bauprinzip wird vorzugsweise derart verwirklicht, daß der Materialblock in seinem zur Parallelogrammebene senkrechten Querschnitt die Form eines H-Profils aufweist, dessen beide H-Schenkel die Bereiche größerer Materialstärke und dessen die beiden H-Schenkel verbindender H-Steg den Bereich kleinerer Materialstärke bilden. Der solchermaßen geformte Materialblock läßt sich besonders einfach dadurch herstellen, daß größere Längen des H-Profils stranggepreßt und davon Stücke der für den Materialblock erforderlichen Länge abgeschnitten werden.

Insbesondere sind solche Ausführungsformen bevorzugt, bei denen die den Lastaufnehmer, die Parallelogrammlenker und das feststehende Teil begrenzenden materialfreien Bereiche zumindest teilweise nur durch dünne Schnittlinien gebildet sind. Hierdurch können die Zwischenräume zwischen den einzelnen Komponenten, zumindest an den maßgeblichen Stellen, nur eine optimal kleine räumliche Ausdehnung aufweisen, wodurch bei gleicher Belastungsfähigkeit das Bauvolumen reduziert bzw. bei gleichem Bauvolumen die Belastungsfähigkeit gesteigert werden kann. Dies ist in der von derselben Anmelderin am 14. Juni 1991 hinterlegten deutschen Patentanmeldung P 41 19 734.8, der darauf beruhenden europäischen Patentanmeldung EP 518 202 A und der am 12. Februar 1996 hinterlegten deutschen Patentanmeldung EP 196 05 087 A ausführlich dargestellt und beschrieben. Der diesbezügliche Offenbarungsgehalt dieser früheren Anmeldung wird hiermit durch Bezugnahme eingeschlossen.

In einer bevorzugten weiteren Ausgestaltung ist vorgesehen, daß der einen der beiden Parallelogrammlenker begrenzende materialfreie Bereich auf seiner diesem Parallelogrammlenker abgewandten Seite den Tragbereich des feststehenden Teils und der den anderen der beiden Parallelogrammlenker begrenzende materialfreie Bereich auf seiner diesem anderen Parallelogrammlenker abgewandten Seite den an den Lastaufnehmer angekoppelten Hebel der Kraftübertragungsvorrichtung begrenzt. Hierbei nimmt der an den Lastaufnehmer angekoppelte Hebel mit seinem dem an ihn angrenzenden Parallelogrammlenker zugewandten Bereich an der größeren Materialstärke des Materialblocks teil, wodurch auch die Festigkeit dieses Hebels erhöht wird. Dies ist insbesondere dann vorteilhaft, wenn die in diesen Hebel vom Lastaufnehmer eingeleitete Kraft hoch ist und erst die Belastung nachgeschalteter Hebel infolge der durch den ersten Hebel bedingten Übersetzung kleiner wird. Auch dies ist in den vorgenannten früheren Anmeldungen ausführlich erläutert.

Diese Ausführungsform wird zweckmäßig dadurch weitergebildet, daß der den an den Lastaufnehmer angekoppelten Hebel auf seiner dem an ihn angrenzenden Parallelogrammlenker abgewandten Seite begrenzende materialfreie Bereich sich in dem Bereich kleinerer Materialstärke des Materialblocks erstreckt. Auf diese Weise können unmittelbar angrenzend an den an den Lastaufnehmer angekoppelten Hebel im Bereich kleinerer Materialstärke weitere Teile der Kraftübertragungsvorrichtung, beispielsweise ein oder mehrere nachgeschaltete weitere Hebel, ausgebildet werden, wie es in den oben erwähnten früheren Anmeldungen beschrieben ist.

Weitere Merkmale, Einzelheiten und Vorteile der Erfindung ergeben sich aus der folgenden Beschreibung und der Zeichnung, auf die bezüglich einer erfindungswesentlichen Offenbarung aller im Text nicht erwähnten Einzelheiten ausdrücklich hingewiesen wird. Hierin zeigt:

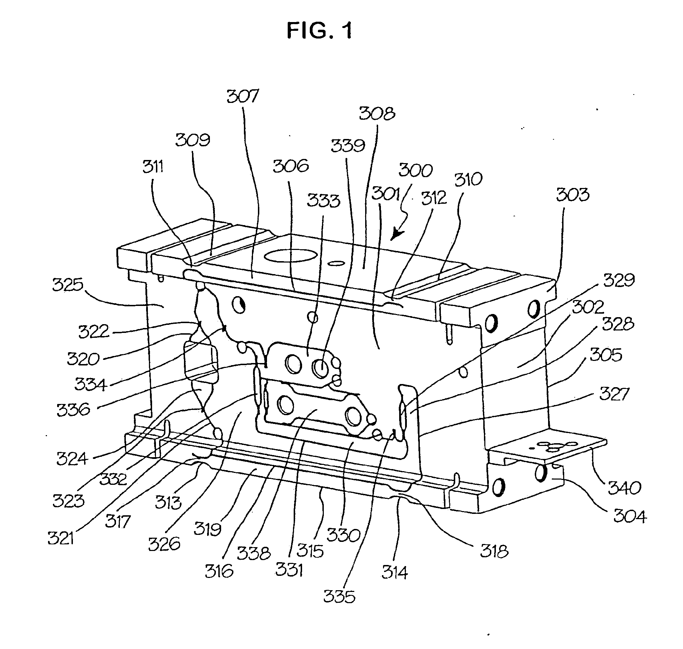

- Fig. 1: eine perspektivische Ansicht einer Ausführungsform mit einstückiger Ausbildung von Parallelogrammführung und Kraftübertragungsvorrichtung.

In dieser Figurendarstellung weist die Richtung der in den Lastaufnehmer 325 eingeleiteten, zu messenden Kraft von oben nach unten. Aus Fig. 1 geht auch hervor, daß in der Quaderseitenfläche 302 des feststehenden Teils vier Gewindebohrungen eingelassen sind, welche der Festlegung des Materialblocks 300 beziehungsweise der Wägezelle an einem Waagengehäuse oder einer Grundplatte mittels Schraubbolzen dienen.

Der in Fig. 1 dargestellten Ausführungsform liegt ein im wesentlichen quaderförmiger einstückiger Materialblock 300 zugrunde, dessen beiden größeren Quaderseitenflächen 301 sich parallel zur Parallelogrammebene der Parallelogrammführung erstrecken. In seinem zur Parallelogrammebene senkrechten Querschnitt weist der Materialblock 300 die Form eines H-Profils auf, was in Fig. 1 insbesondere anhand der die beiden zur Parallelogrammebene parallelen größeren Quaderseitenflächen 301 verbindenden, sich quer zur Parallelogrammebene erstreckenden kleineren Quaderseitenfläche 302 ersichtlich ist. Auf diese Weise ist die Materialstärke des Materialblocks 300 senkrecht zur Parallelogrammebene im Bereich der beiden H-Schenkel 303, 304 des H-Profils größer als im Bereich des die beiden H-Schenkel 303, 304 verbindenden H-Stegs 305.

Eine den in Fig. 1 oberen H-Schenkel 303 senkrecht zur Parallelogrammebene durchsetzende dünne Schnittlinie 306 bildet einen materialfreien Bereich, der in dem Materialblock 300 einen oberen Parallelogrammlenker 307 begrenzt, welcher an seiner der dünnen Schnittlinie 306 entgegengesetzten Seite von der zu den Quaderseitenflächen 301 und 302 senkrechten Quaderseitenfläche 308 begrenzt ist. In Gegenüberstellung zu den Endbereichen der dünnen Schnittlinie 306 sind in der oberen Quaderseitenfläche 308 zum Inneren des Materialblocks 300 hin gewölbte Ausnehmungen 309, 310 ausgebildet, zu denen hin die Endbereiche der dünnen Schnittlinie 306 spiegelbildlich symmetrisch gewölbt sind. Auf diese Weise begrenzen die gewölbten Ausnehmungen 309, 310 mit den ihnen gegenüberliegenden Endbereichen der dünnen Schnittlinie 306 Dünnstellen 311, 312, die als elastische Biegestellen des oberen Parallelogrammlenkers 307 dienen.

Auf die gleiche Weise begrenzen in dem in Fig. 1 unteren H-Schenkel 304 zwei zu den gewölbten Ausnehmungen 309, 310 spiegelbildliche Ausnehmungen 313, 314 der unteren Quaderseitenfläche 315 zusammen mit einer zu der dünnen Schnittlinie 306 spiegelbildlich ausgebildeten dünnen Schnittlinie 316 Biegestellen 317, 318 eines sich dazwischen erstreckenden unteren Parallelogrammlenkers 319.

Die dünne Schnittlinie 306 ist von ihrem in Fig. 1 linken Endbereich aus umbiegend quer zur Längsrichtung der Parallelogrammlenker 307, 319 in einem Fortsetzungsabschnitt 320 bis in einen Abstand zum unteren Parallelogrammlenker 319 derart weitergeführt, daß in ihrem Verlauf längs des Fortsetzungsabschnittes 320 zwei voneinander beabstandete, hinsichtlich des Materialblocks 300 nach innen weisende Wölbungen gebildet werden. An diese beiden Wölbungen läuft ein von dem in Fig. 1 linken Endbereich der den unteren Parallelogrammlenker 319 begrenzenden dünnen Schnittlinie 316 abzweigender Schnittlinienabschnitt 321 mit dazu spiegelbildlich geformten Wölbungen heran. Auf diese Weise begrenzen diese Wölbungen des Fortsetzungsabschnittes 320 und des Schnittlinienabschnittes 321 zwischen sich dünne Biegestellen 322, 323, zwischen denen sich ein quer zur Längsrichtung der Parallelogrammlenker 307, 319 ausgerichtetes Koppelglied 324 erstreckt.

Auf diese Weise begrenzt der Fortsetzungsabschnitt 320 und der sich zwischen der in Fig. 1 unteren dünnen Biegestelle 323 und der Biegestelle 317 des unteren Parallelogrammlenkers 319 erstreckende Teil des Schnittlinienabschnittes 321 den Lastaufnehmer 325, der über die dünne Biegestelle 323 mit dem Koppelglied 324 zusammenhängt.

Auf seiner dem Lastaufnehmer 325 abgewandten Seite begrenzt der Schnittlinienabschnitt 321 zusammen mit dem sich zwischen der in Fig. 1 oberen Biegestelle 322 und der Biegestelle 311 des oberen Parallelogrammlenkers 307 erstreckenden Teil des Fortsetzungsabschnittes 320 einen Hebel 326, der mit dem Koppelglied 324 an dessen oberer Biegestelle 322 zusammenhängt.

Gegen den unteren Parallelogrammlenker 319 hin ist der Hebel 326 von der Schnittlinie 316 begrenzt. Diese ist über ihren die dem Lastaufnehmer 325 abgewandte Biegestelle 318 begrenzenden Endbereich hinaus quer zur Längsrichtung der Parallelogrammlenker 307, 319 etwa bis in die Mitte des die geringere Materialstärke aufweisenden H-Stegs 305 hineingeführt, wobei dieser weitergeführte Schnittlinienabschnitt 327 der Bildung eines Ankopplungsbereichs 328 des Hebels 326 dient. An diesem Ankopplungsbereich 328 hängt der Hebel 326 mit einem ebenfalls durch dünne Schnittlinien begrenzten weiteren Koppelglied 329 zusammen, das an seinem dem Ankopplungsbereich 328 abgewandten und ebenfalls als Biegestelle ausgebildeten Ende mit einem dem Hebel 326 nachgeschalteten weiteren Hebel 330 zusammenhängt. Dieser ist gegen den Hebel 326 durch eine in dem H-stegförmigen Bereich 305 kleinerer Materialstärke verlaufende dünne Schnittlinie 331 abgegrenzt.

Das dem Ankopplungsbereich 328 abgewandte Ende des weiteren Hebels 330 hängt über ein Koppelglied 332 mit einem ausgangsseitigen Hebel 333 der von den Hebeln und den Koppelgliedern gebildeten Kraftübertragungsvorrichtung zusammen. Ebenso wie der an den Lastaufnehmer angekoppelte Hebel 326 und sein Koppelglied 324 sind auch die anderen Koppelglieder und Hebel nebst den sie verbindenden Dünnstellen durch dünne Schnittlinien begrenzt. Das gleiche gilt für die Biegestellen 334, 335 und 336, welche die Drehpunkte dieser Hebel bilden. All dies ist aus dem in Fig. 1 dargestellten Schnittlinienmuster deutlich erkennbar.

Die als Hebeldrehpunkte dienenden Biegestellen 334, 335, 336 sind an dem feststehenden Tragbereich 337 des Materialblocks 300 ausgebildet, der auf seiner den Hebeln 326, 330 und 333 abgewandten Seite durch die in dem oberen H-Schenkel 304 verlaufende dünne Schnittlinie 306 gegen den oberen Parallelogrammlenker 307 abgegrenzt ist.

Ein in Fig. 1 noch erkennbarer, parallelogrammgeführter Innenbereich 338 des Materialblocks 300, der mit dem weiteren Hebel 330 gekoppelt ist, dient zur Ankopplung eines Kalibriergewichts, wie es in der früheren Anmeldung EP 196 05 087 ausführlich erörtert ist. In dem ausgangsseitigen Hebel 333 ausgebildete Bohrlöcher 339 dienen der Befestigung nicht dargestellter Hebelverlängerungsarme, die sich zu einem auf einer Konsole 340 des feststehenden Teils angeordneten elektromagnetischen Kraftkompensationssystem erstrecken.

Zur Einstellung der Biegesteifigkeit der Dünnstellen 311, 312 des oberen Parallelogrammlenkers 307 beziehungsweise der Biegestellen 317, 318 des unteren Parallelogrammlenkers können im Bereich der Dünnstellen nicht dargestellte Ausnehmungen oder Durchbrechungen ausgebildet sein, welche das jeweilige Ende des Parallelogrammlenkers 307 quer zu dessen Ebene vollständig durchsetzen. Diese Durchbrechungen bestimmen zusammen mit den materialfreien Bereichen 306, 316 die Querschnittsflächen und damit die Steifigkeit der Biegelager.

### Verzeichnis der Bezugszeichen

- 300: einstückiger Materialblock
- 301: Quaderseitenfläche
- 302: Quaderseitenfläche
- 303, 304: H-Schenkel
- 305: H-Steg
- 306: materialfreier Bereich
- 307: oberer Parallelogrammlenker
- 308: Quaderseitenfläche
- 309, 310: gewölbte Ausnehmungen
- 311, 312: Dünnstellen
- 313, 314: Ausnehmungen
- 315: Quaderseitenfläche
- 316: materialfreier Bereich
- 317, 318: Biegestellen
- 319: unterer Parallelogrammlenker
- 320: Fortsetzungsabschnitt
- 321: Schnittlinienabschnitt
- 322, 323: dünne Biegestellen
- 324: Koppelglied
- 325: Lastaufnehmer
- 326: Hebel
- 327: Schnittlinienabschnitt
- 328: Ankopplungsbereich
- 329: weiteres Koppelglied
- 330: weiterer Hebel
- 331: dünne Schnittlinie
- 332: Koppelglied
- 333: ausgangsseitiger Hebel
- 334, 335, 336: Dünnstellen
- 337: Tragbereich
- 338: parallelogrammgeführter Innenbereich
- 339: Bohrlöcher
- 340: Konsole

## Patentansprüche

1. Kraftmeßvorrichtung, insbesondere Wägezelle, mit einem zur Aufnahme der zu messenden Kraft dienenden Lastaufnehmer (325), der von zwei in zwei zueinander parallelen Ebenen sich erstreckenden, in der Richtung dieser Ebenen steifen und quer zur Richtung dieser Ebenen biegeelastischen Parallelogrammlenkern (307, 319), deren jeder an einem Ende mit dem Lastaufnehmer (325) und an einem in der Längsrichtung des Parallelogrammlenkers (307, 319)dazu entgegengesetzten anderen Ende mit einem feststehenden Teil der Kraftmeßvorrichtung verbunden ist, an dem feststehenden Teil parallel auslenkbar geführt ist, und einer zur Übertragung mindestens eines Teils der den Lastaufnehmer (325) belastenden, zu messenden Kraft auf einen Meßwandler zur Lieferung eines der zu messenden Kraft entsprechenden Signals dienenden Vorrichtung, die mindestens einen um eine bezüglich eines sich zwischen den beiden Parallelogrammlenkern (307, 319) in einer zu deren Ebene parallelen Ebene erstreckenden Tragbereichs (337) des feststehenden Teils feststehende Schwenkachse verschwenkbaren, der Kraftübertragung dienenden Hebel (326) aufweist, der an den Lastaufnehmer (325) kräftemäßig angekoppelt ist, **dadurch gekennzeichnet, daß** der Lastaufnehmer (325), die Parallelogrammlenker (307, 319), das feststehende Teil und der Hebel (326) durch einstückig zusammenhängende Materialbereiche eines quaderförmigen Materialblocks (300) gebildet sind, in dem diese Materialbereiche von den Materialblock (300) quer zu der in der Längsrichtung der Parallelogrammlenker (307, 319) sich erstreckenden Parallelogrammebene durchsetzenden materialfreien Bereichen (306, 316, 320, 321, 327) begrenzt sind und der im Bereich der Parallelogrammlenker (307, 319) und der sie begrenzenden materialfreien Bereiche (306, 316) quer zur Parallelogrammebene eine größere Materialstärke aufweist als im Bereich des Hebels (326).

2. Kraftmeßvorrichtung nach Anspruch 1, **dadurch gekennzeichnet, daß** der Materialblock (300) in seinem zur Parallelogrammebene senkrechten Querschnitt die Form eines H-Profils aufweist, dessen beide H-Schenkel (303, 304) die Bereiche größerer Materialstärke und dessen die beiden H-Schenkel (303, 304) verbindender H-Steg (305) den Bereich kleinerer Materialstärke bilden.

3. Kraftmeßvorrichtung nach Anspruch 1 oder 2, **dadurch gekennzeichnet, daß** die den Lastaufnehmer (325), die Parallelogrammlenker (307, 319) und das feststehende Teil begrenzenden materialfreien Bereiche (306, 316, 320, 321, 327) zumindest teilweise nur durch dünne Schnittlinien gebildet sind.

4. Kraftmeßvorrichtung nach einem der Ansprüche 1 bis 3, **dadurch gekennzeichnet, daß** der einen der beiden Parallelogrammlenker (307) begrenzende materialfreie Bereich (306) auf seiner diesem Parallelogrammlenker (307) abgewandten Seite den Tragbereich des feststehenden Teils und der den anderen der beiden Parallelogrammlenker (319) begrenzende materialfreie Bereich (316) auf seiner diesem anderen Parallelogrammlenker (319) abgewandten Seite den an den Lastaufnehmer (325) angekoppelten Hebel (326) der Kraftübertragungsvorrichtung begrenzt.

5. Kraftmeßvorrichtung nach Anspruch 4, **dadurch gekennzeichnet, daß** der den an den Lastaufnehmer (325) angekoppelten Hebel (326) auf seiner dem an ihn angrenzenden Parallelogrammlenker (319) abgewandten Seite begrenzende materialfreie Bereich (331) sich in dem Bereich kleinerer Materialstärke des Materialblocks (300) erstreckt.

## Claims

1. Force-measuring device, specifically a weighing cell, comprising a load receiver (325) serving to receive the force that is to be measured, said load receiver being guided in a movement of parallel displacement in relation to a stationary part of the force-measuring device by two parallelogram guides (307, 319) that extend in two mutually parallel planes, are rigid with regard to deformation within their respective planes and have elastic flexibility transverse to the planes, each of the parallelogram guides (307, 319) having one end connected to the load receiver (325) and another, opposite end connected to the stationary part of the force-measuring device, further comprising a force-transmitting mechanism through which at least a partial amount of the force to be measured that is received by the load receiver (325) is transmitted from the latter to a measuring transducer that serves to deliver a signal corresponding to the force to be measured, said force-transmitting mechanism having at least one force-transmitting lever (326) which is pivoted on a fulcrum axis fixed on a support portion (337) of the stationary part extending between the two parallelogram guides (307, 319) in a plane that is parallel to the common plane of the parallelogram guides, wherein said lever (326) is coupled through a force-transmitting connection to the load receiver (325), **characterized in that** the load receiver (325), the parallelogram guides (307, 319), the stationary part and the lever (326) are formed by monolithically interconnected material portions of a rectangular material block (300), wherein said material portions are delimited by material-free spaces (306, 316, 320, 321, 327) traversing the material block (300) in the direction perpendicular to the parallelogram plane which extends in the lengthwise direction of the parallelogram guides (307, 319), and wherein in the area of the parallelogram guides (307, 319) and the material-free spaces (306, 316) delimiting them, said material block (300) has a greater material width, perpendicular to the parallelogram plane, than in the area of the lever (326).

2. Force-measuring device according to claim 1, **characterized in that** the material block (300), in a cross-section perpendicular to the parallelogram plane, has the shape of an H-profile wherein the two legs (303, 304) of the H represent the areas of greater material width and the H-connector section (305) between the legs represents the area of smaller material width.

3. Force-measuring device according to claim 1 or 2, **characterized in that** the material-free spaces (306, 316, 320, 321, 327) delimiting the load receiver (325), the parallelogram guides (307, 319) and the stationary part are at least in part formed only by thin linear cuts.

4. Force-measuring device according to one of the claims 1 to 3, **characterized in that** the material-free space (306) delimiting one of the two parallelogram guides (307) delimits on the opposite side from said parallelogram guide (307) the support portion of the stationary part, and that the material-free space (316) delimiting the other of the two parallelogram guides (319) delimits on the opposite side from said parallelogram guide (319) the lever (326) of the force-transmitting mechanism which is coupled to the load receiver (325).

5. Force-measuring device according to claim 4, **characterized in that** the material-free space (331) whereby the lever (326) that is coupled to the load receiver (325) is delimited on the side that faces away from the parallelogram guide (319) bordering on the lever (326) extends in the area of smaller material width of the material block (300).

## Revendications

1. Dispositif de mesure de force, en particulier cellule de pesée, comprenant un récepteur de charge (325) servant à la réception de la force à mesurer, qui est guidé sur la partie fixe de façon à pouvoir être dévié parallèlement par deux tiges directrices à parallélogramme (307, 319) s'étendant dans deux plans parallèles entre eux, rigides dans la direction de ces plans et élastiques en flexion transversalement à la direction de ces plans, dont chacune est reliée par une extrémité au récepteur de charge (325) et sur l'autre extrémité, opposée à la première dans la direction longitudinale de la tige directrice à parallélogramme (307, 319), à une partie fixe du dispositif de mesure de force, et un dispositif servant à la transmission d'au moins une partie de la force chargeant le récepteur de charge (325) et à mesurer à un convertisseur de mesure pour la fourniture d'un signal correspondant à la force à mesurer, lequel dispositif présente au moins un levier (326) pouvant basculer autour d'un axe de pivotement fixe par rapport à une zone de port (337) s'étendant entre les deux tiges directrices à parallélogramme (307, 319) dans un plan parallèle au premier plan, et servant à la transmission de la force, lequel levier est rattaché au niveau de la force au récepteur de charge (325), **caractérisé en ce que** le récepteur de charge (325), les tiges directrices à parallélogramme (307, 319), la partie fixe et le levier (326) sont formés par les zones de matériau communiquant d'une seule pièce d'un bloc de matériau (300) de forme parallélépipédique, dans lequel ces zones de matériau sont délimitées par des zones (306, 316, 320, 321, 327) sans matériau traversant le bloc de matériau (300) transversalement au plan du parallélogramme s'étendant dans la direction longitudinale des tiges directrices à parallélogramme (307, 319) et qui présente dans la zone des tiges directrices à parallélogramme (307, 319) et des zones (306, 316) sans matériau qui les délimite transversalement au plan du parallélogramme une épaisseur de matériau plus grande que dans la zone du levier (326).

2. Dispositif de mesure de force selon la revendication 1, **caractérisé en ce que** le bloc de matériau (300) présente dans sa section perpendiculaire au plan du parallélogramme la forme d'un profilé en H, dont les deux branches en H (303, 304) forment les zones de plus grande épaisseur de matériau et dont l'entretoise en H (305) reliant les deux branches en H (303, 304) forme la zone de plus petite épaisseur de matériau.

3. Dispositif de mesure de force selon la revendication 1 ou 2, **caractérisé en ce que** les zones (306, 316, 320, 321, 327) sans matériau, délimitant le récepteur de charge (325), les tiges directrices à parallélogramme (307, 319) et la partie fixe sont formées au moins en partie uniquement par des lignes de coupe minces.

4. Dispositif de mesure de force selon l'une quelconque des revendications 1 à 3, **caractérisé en ce que** la zone (306) sans matériau délimitant l'une des deux tiges directrices à parallélogramme (307) délimite la zone de port de la partie fixe sur son côté opposé à cette tige directrice à parallélogramme (307) et la zone (316) sans matériau, délimitant l'autre des deux tiges directrices à parallélogramme (319), délimite le levier (326), rattaché au récepteur de charge (325), du dispositif de transmission de force sur son côté opposé à cette autre tige directrice à parallélogramme (319).

5. Dispositif de mesure de force selon la revendication 4, **caractérisé en ce que** la zone (331) sans matériau, délimitant le levier (326) rattaché au récepteur de charge (325) sur son côté opposé à la tige directrice à parallélogramme (319) contiguë au levier, s'étend dans la zone de plus faible épaisseur de matériau du bloc de matériau (300).
